# EUROPEAN PATENT SPECIFICATION

(11) **EP 2 591 584 B1**
(45) Date of publication and mention of the grant of the patent: **17.06.2015**
(21) Application number: 12702826.4
(22) Date of filing: 07.02.2012
(51) Int. Cl.: H04L 29/06

(54) **METHOD AND APPARATUS FOR MAINTAINING A REGISTRATION FOR AN EMERGENCY SERVICE**
VERFAHREN UND VORRICHTUNG ZUR AUFRECHTERHALTUNG EINER REGISTRIERUNG FÜR EINEN NOTDIENST
PROCÉDÉ ET APPAREIL POUR MAINTENIR L'INSCRIPTION D'UN UTILISATEUR POUR UN SERVICE D'URGENCE

(30) Priority: 16.02.2011 WO PCT/EP2011/052292
(43) Date of publication of application: 15.05.2013
(73) Proprietor: Nokia Solutions and Networks Oy, 02610 Espoo (FI)
(72) Inventor: VARGA, Jozsef, H-7985 Nagydobsza (HU); SHEN, Jiadong, 81379 München (DE); LEIS, Peter, 82377 Penzberg (DE); WIEHE, Ulrich, 36251 Bad Hersfeld (DE)
(74) Representative: Borgström, Markus
(86) International application number: PCT/EP2012/051989
(87) International publication number: WO 2012/110350

(56) References cited:
- ALCATEL-LUCENT: "S-CSCF handling of emergency registration", 3GPP DRAFT; C1-082874_REL-8, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080811, 11 August 2008 (2008-08-11), XP050308157, [retrieved on 2008-08-11]
- LUCENT TECHNOLOGIES: "Filter criteria matching and generation of third-party REGISTER request for network-initiated deregistration", 3GPP DRAFT; N1-050221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG CN, no. Sydney, Australia; 20050302, 2 March 2005 (2005-03-02), XP050060030, [retrieved on 2005-03-02]

## Description

### Technical field of the invention:

The present invention relates to a mechanism for registration. In particular, the present invention is related to a method and apparatus for maintaining a user registered for an emergency service.

### Background of the invention:

Within the IP (Internet Protocol) Multimedia Subsystem (IMS) as defined by 3^{rd} Generation Partnership Project (3GPP) Session Initiation Protocol (SIP) defined by Internet Engineering Task Force (IETF) is used for controlling communication. SIP is an application-layer control protocol for creating, modifying, and terminating sessions with one or more participants. These sessions may include Internet multimedia conferences, Internet telephone calls, and multimedia distribution. Members in a session can communicate via multicast or via a mesh of unicast relations, or a combination of these. Session Description Protocol (SDP) is a protocol which conveys information about media streams in multimedia sessions to allow the recipients of a session description to participate in the session. The SDP offers and answers can be carried in SIP messages. Diameter protocol has been defined by IETF and is intended to provide an Authentication, Authorization and Accounting (AAA) framework for applications such as network access or IP mobility.

Generally, for properly establishing and handling a communication connection between network elements such as a user equipment and another communication equipment or user equipment, a database, a server, etc., one or more intermediate network elements such as control network elements, support nodes, service nodes and interworking elements are involved which may belong to different communication networks.

Also procedures for IMS emergency services have been defined by the 3GPP. Emergency call is an example of emergency services. Before establishing an IMS emergency session, user equipment (UE) must attach to the IP connectivity access network (IP-CAN) and, if required by local regulations, must be registered to the IMS. However, an IMS emergency registration cannot be distinguished in a home subscriber server (HSS) from a normal IMS registration.

Document "S-CSCF handling of emergency registration" (3GPP contribution nr C1-082874, 11-Aug-2008) discloses rejecting a user initiated emergency de-registration request. Document "Filter criteria matching and generation of third-party REGISTER request for network-initiated deregistration" (3GPP contribution N1-050221, 2-March-2005) discloses handling of network initiated deregistration.

### Summary of the invention

The present invention overcomes above drawbacks by providing an apparatus, a method and a computer program product comprising receiving a request to terminate a registration of a user, determining if the user is registered for an emergency service, maintaining the user registered for the emergency service, if based on the determination the user is registered for the emergency service, and transmitting an indication indicating that the user is registered for an emergency service if based on the determination the user is registered for the emergency service.

The apparatus, method and computer program product can comprise terminating at least one registration relating to the user, wherein the at least one registration does not comprise a registration for an emergency service.

The user can comprise or can be identified with a user identity and/or a public identity and/or an IMPU.

The indication can be transmitted:
- responsive to the request, and/or,
- in a rejection, and/or,
- in a response, and/or,
- according to diameter protocol, and/or
- in Registration-Termination-Answer message (RTA).

The indication can comprise an experimental result code of an internet protocol multimedia subsystem (IMS).

The request can comprise:
- a request received from a subscription entity, and/or,
- a de-registration, and/or,
- network initiated de-registration.

Further, an apparatus, a method and a computer program are provided for transmitting a request to terminate a registration of a user, receiving an indication indicating that the user is registered for an emergency service, and, maintaining the registration of the user active based on the received indication.

The indication can be received:
- responsive to the request, and/or,
- in a rejection, and/or,
- in a response, and/or,
- according to diameter protocol, and/or
- in Registration-Termination-Answer message (RTA).

Embodiments of the present invention may have one or more of following advantages:
- An HSS is made aware of active emergency registration of a user.
- An active emergency registration of a user can be kept alive, even when terminating normal registration of the user.
- Enable a call back from an emergency centre to succeed.

### Description of drawings

Figures 1 illustrates signalling and interfaces between relevant network elements according to aspects of the invention.
Figures 2 illustrates examples of internal structure and functions of apparatuses implementing aspects of the invention.

### Detailed description of the invention

Different types of network entities and functions exist in the IMS network. Call Session Control Functions (CSCF) implement a session control function in SIP layer. The CSCF can act as Proxy CSCF (P-CSCF), Serving CSCF (S-CSCF) or Interrogating CSCF (I-CSCF). The P-CSCF is the first contact point for the User Equipment (UE) within the IMS; the S-CSCF handles the session states in the network; the I-CSCF is mainly the contact point within an operator's network for all IMS connections destined to a subscriber of that network operator, or a roaming subscriber currently located within that network operator's service area.

The functions performed by the I-CSCF are, for example, assigning an S-CSCF to a user performing a SIP registration and routing SIP requests received from another network towards the S-CSCF. The S-CSCF can perform the session control services for the UE. It maintains a session state as needed by the network operator for support of the services and may be acting as Registrar, i.e. it accepts registration requests and makes its information available through the location server (e.g. HSS). The S-CSCF is the central point to users that are hosted by this S-CSCF. The S-CSCF can provide services to registered and unregistered users when it is assigned to these users. This assignment can be stored in the Home Subscriber Server (HSS).

The HSS is the master database for a given user. It is the entity containing the subscription-related information to support the network entities actually handling calls/sessions. As an example, the HSS provides support to the call control servers (CSCFs) in order to complete the routing/roaming procedures by solving authentication, authorisation, naming/addressing resolution, location dependencies, etc.

The HSS can be responsible for holding the following user related information:
- User identification, numbering and addressing information, including a display name.
- User security information: Network access control information for authentication and authorization, such as password information
- User Location information at inter-system level: the HSS supports the user registration, and stores inter-system location information, etc.
- User profile information.

An IMS public user identity (IMPU) is a user identity that is used by any user for requesting communications with other users. The IMPU can take the form of a SIP uniform resource identifier (URI) or an E.164 number. Every IMS subsystem subscriber has one or more public user identities. At least one public user identity can be stored in the IM services identity module (ISIM). UE can receive more public identities from the IMS, where they can be stored in the HSS.

IMS private user identity (IMPI) is a user identity that is assigned by the home network operator and used, for example, for registration, authorisation, administration, and accounting purposes. The IMPI can be stored in ISIM and the IMPI can be derived from the international mobile subscriber identity (IMSI).

In an IMS registration with a CSCF, user equipment (UE) registers itself to a CSCF for a specific time, and the CSCF becomes the UE's serving CSCF (S-CSCF). The time for which the UE is registered in the CSCF is called registration lifetime. For the registration lifetime a binding can be created between the Contact address (IP address) of the UE and the public user identities of the user (both can be provided in the registration request).

De-registration is a process in which UE ends its current registration to the serving call state control function (S-CSCF). De-registration is actually a registration where the registration lifetime is set to 0.

Network initiated de-registration is a process in which a network element, for example, an S-CSCF or a HSS initiates de-registration of the user.

Registration-Termination-Request (RTR) message is a Diameter command message that a Diameter multimedia server sends to a Diameter multimedia client to request the de-registration of a user. Registration-Termination-Answer (RTA) message is a Diameter command message that a client sends as a response to a previously received Registration-Termination-Request message.

Cx reference point or Cx interface is an interface between a CSCF and a HSS, supporting the transfer of data between them. The Cx reference point is based on the diameter protocol with 3GPP standard diameter applications. Sh interface is a corresponding interface between the HSS and an AS. Diameter is an authentication, authorisation, and accounting (AAA) protocol defined by the IETF and used for network access services, such as dial-up and mobile IP. The Diameter base protocol is evolved from the remote authentication dial-in user service (RADIUS) protocol.

Diameter multimedia client and Diameter multimedia server implement the Diameter multimedia application. The client is one of the communicating Diameter peers that usually initiates transactions. Examples of communication elements that may implement the Diameter multimedia client are the I-CSCF and S-CSCF. An example of a Diameter multimedia server is the HSS.

Attribute-value pair (AVP) is a generic pair of values that consists of an attribute header and the corresponding value. The AVP can be used, for example, to encapsulate protocol-specific data such as routing information, as well as authentication, authorisation, or accounting information. Diameter messages can contain AVPs to transmit information between an CSCF and the HSS.

Emergency registration is a special registration that relates to binding of a public user identity to a contact address used for emergency service. The contact address can be embedded in SIP Contact header. Emergency service related requests can obtain priority over normal requests in the IMS.

The IMS registration request can include an emergency indication. The implicit registration set of the emergency Public User Identifier can contain an associated TEL URI that is used to call back the user from the PSTN. After registration, the UE can initiate an IMS emergency session establishment using the IMS session establishment procedures containing an emergency session indication and any registered Public User Identifier.

Public safety answering point (PSAP) is a network element for emergency services that is responsible for answering emergency calls and can perform call back to a user which has previously called the PSAP. However, the call back can succeed only if the user is still registered at the time the call back is performed.

It would be beneficial not to de-register a user which is currently emergency registered to the network, to support emergency call back function. Currently it is not defined what the S-CSCF can do when a registration termination request (RTR) is received from the HSS, if the affected user is emergency registered (and optionally has a normal registration in parallel).

Currently no procedures or response codes have been defined how the S-CSCF can either reject the HSS initiated registration termination in this case, or indicate to HSS that the normal registration is terminated but the user has emergency registration and thus the HSS must keep the user's status as registered and keep the S-CSCF name as well (both necessary to enable emergency call back).

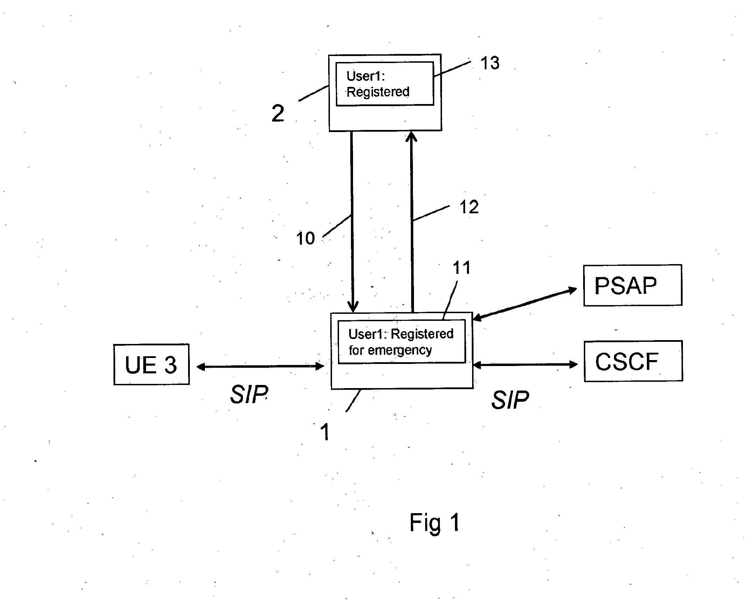

According to an aspect of the invention (shown in figure 1), when a session control entity 1 (S-CSCF) receives a registration termination request 10 (for example, an RTR message) relating to a user (e.g. user1 of UE 3), the S-CSCF 1 can reject the RTR and can transmit an indication (for example a response code) in a response message 12 (for example, an RTA) so that the HSS 2 can become aware of that:
- normal registration(s) associated with the affected user (e.g. user 1 )are terminated, and/or
- the user (e.g. user 1) has active emergency registration which is to be kept.

According to an aspect of the invention, as a result of receiving the response 12, the HSS 2 can keep the user's status as registered and may not delete the S-CSCF name as the registrar of the user (and thus enabling emergency call back).

According to another aspect of the invention, when a session control entity 1 (S-CSCF) receives a registration termination request 10 (for example, an RTR message) for a user (user1 of UE 3), the S-CSCF 1 can accept the RTR (i.e. is not rejecting it), but can indicate within the response 12 that the deregistered user still has an emergency registration. When receiving this response 12, the HSS 2 can keep the user's status as registered and keep the S-CSCF name as assigned S-CSCF for the user.

Two solutions have been described, the difference is whether the response is considered as a reject with a special response code or an accept with additional indication.

The rejection with a special response code can have an advantage that even an HSS from an earlier release (not implementing aspects of the invention) will keep the registration status of the user.

The registration termination request can be a de-registration, for example a network (HSS) initiated de-registration and can happen over Cx interface. The registration termination request can contain user identities (user identity, public identity IMPU) which registration is to be terminated. An IMPU can be registered with an IMPI. Hence, via an RTR can one or more IMPU/IMPI pairs be de-registered.

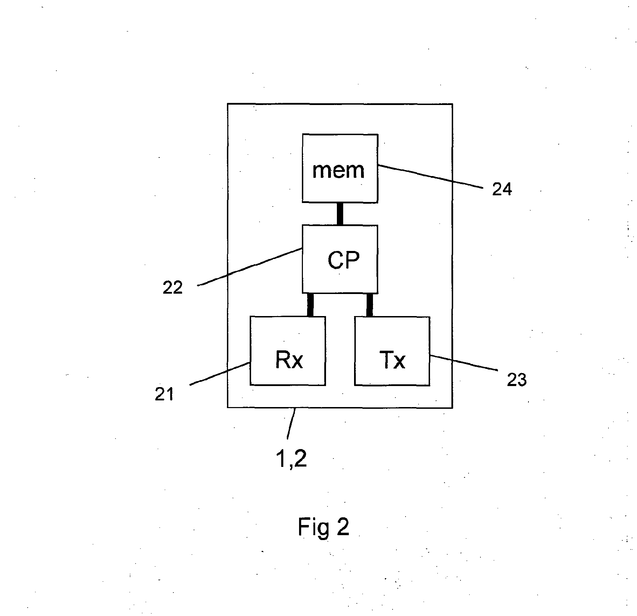

Figure 2 illustrates examples of internal structure and functions of apparatuses implementing aspects of the invention. The apparatus (S-CSCF1, HSS 2) can have a receiving unit 21 (receiver) configured to receive signaling messages, for example, Diameter messages (RTA, RTA). The receiving unit 21 can be configured to extract from a received message an indication indicating that a user (user identity, public identity, IMPU) to which the message relates to has an active registration to an emergency service. A processing unit 22 (processor) can be configured to handle received messages and, for example, to determine status of various registrations of the user, for example, to determine if the user has an active emergency registration. The processing unit 22 can interface a memory unit 24 (memory) which can be configured to maintain information of users, user identities (IMPUs), registration states, etc. A transmitting unit 23 (transmitter) can be configured to transmit signaling messages, for example, Diameter messages (RTA, RTA). The processing unit 22 can be configured to include an indication in a message to be transmitted by the transmitting unit 23. The indication can be a result code or other indication indicating that the user (user identity, public identity, IMPU) to which the message relates to is having an active registration to an emergency service.

The apparatus can be, for example, a subscription entity (HSS 2) or a session control entity (S-CSCF 1).

All units described above in relation to figure 2 may be implemented for example using microprocessors, chips and/or other electrical components and/or by software.

According to an aspect of the invention, it can be forbidden to deregister an emergency registration. The procedures in 3GPP describe on SIP level how to deregister a normal registration for the HSS initiated deregistration case. For emergency registration no SIP procedure is needed, but the HSS must be aware that the emergency registration is there, as to a route terminating PSAP call back using the emergency registration, it is necessary in the HSS to keep the user registered and assigned to the S-CSCF.

According to an aspect of the invention, an S-CSCF must reject the HSS initiated registration termination if the to-be-deregistered user identity has an emergency registration. For normal registration (non-emergency registration) the S-CSCF can still perform deregistration procedures as usual.

Without implementing aspects of the invention, the S-CSCF cannot indicate to the HSS that an emergency registration must be kept alive, thus if the HSS attempts HSS initiated deregistration for the emergency registered user identity, then a later PSAP call back will fail.

According to an aspect of the invention, in case of network initiated de-registration of by the HSS, the HSS can change the state of the Public Identities to "Not Registered" and send a notification to the S-CSCF indicating the identities that shall be de-registered. The procedure invoked by the HSS, can correspond to the functional level operation Cx-Deregister. For emergency registered Public Identities the S-CSCF can reject the network initiated de-registration by returning an experimental result code, for example "DIAMETER_ERROR_EMERGENCY_REGISTRATION". In this case, the HSS shall keep the registration and shall not change the registration state.

According to an aspect of the invention, if the emergency registered Public Identity (IMPU) has normal registration as well, then for the normal registration the S-CSCF can perform the detailed de-registration procedures for each reason code as described in the 3GPP procedures.

According to an aspect of the invention, a new result code can be introduced, for example in Table 8.1.4 of 3GPP specification 29.230, which describes 3GPP specific Permanent Failure result codes:

### Experimental

### Result Code: Result text:

5xxx DIAMETER_ERROR_EMERGENCY_REGISTRATION

The result code can be used when a network initiated de-registration from the HSS is rejected by the S-CSCF because the user is emergency registered.

According to an aspect of the invention, an S-CSCF keeps the user's registration status unchanged for an emergency service, when a network initiated de-registration occurs.

A session control entity and subscription entity may be physically implemented in a switch, router, server or other hardware platform or electronic equipment which can support data transmission and processing tasks, or can be implemented as a component of other existing device.

For the purpose of the present invention as described herein above, it should be noted that
- an access technology via which signaling is transferred to and from a network element or node may be any technology by means of which a node can access an access network (e.g. via a base station or generally an access node). Any present or future technology, such as WLAN (Wireless Local Access Network), WiMAX (Worldwide Interoperability for Microwave Access), BlueTooth, Infrared, and the like may be used; although the above technologies are mostly wireless access technologies, e.g. in different radio spectra, access technology in the sense of the present invention implies also wirebound technologies, e.g. IP based access technologies like cable networks or fixed lines but also circuit switched access technologies; access technologies may be distinguishable in at least two categories or access domains such as packet switched and circuit switched, but the existence of more than two access domains does not impede the invention being applied thereto,
- usable access networks may be any device, apparatus, unit or means by which a station, entity or other user equipment may connect to and/or utilize services offered by the access network; such services include, among others, data and/or (audio-) visual communication, data download etc.;
- a user equipment may be any device, apparatus, unit or means by which a system user or subscriber may experience services from an access network, such as a mobile phone, personal digital assistant PDA, or computer;
- method steps likely to be implemented as software code portions and being run using a processor at a network element or terminal (as examples of devices, apparatuses and/or modules thereof, or as examples of entities including apparatuses and/or modules therefor), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

The invention is not limited to registration handling in the IMS network(s), but may also be applied in other type of networks having similar kind of session control entity and subscription entity roles and where emergency registration should be maintained active and not de-registered by the network. Functions of the gateway entity and session control entity described above may be implemented by code means, as software, and loaded into memory of a computer.

## Claims

1. A session control entity (1), comprising
means for receiving (21), from a subscription entity (2), a request (10) to terminate a registration of a user in an Internet Protocol Multimedia Subsystem, IMS, wherein the request comprises user identities,
means for determining (22) status of various registrations of the user, comprising determining if the user is registered for an IMS emergency service,
means for not terminating (22) the registration of the user for the IMS emergency service,
means for terminating (22) at least one registration relating to the user, wherein the at least one registration does not comprise the registration for the IMS emergency service, and,
means for (23) transmitting to the subscription entity (2) an indication (12) indicating that the user is registered for an emergency service if based on the determination the user is registered for the emergency service, wherein the indication comprises an IMS experimental result code.

2. A session control entity (1) of any of preceding claims, wherein the user comprises one of:
- a user identity,
- a public identity, or
- an IMPU.

3. A session control entity (1) of any of preceding claims, wherein the indication is transmitted at least one of:
- responsive to the request,
- in a rejection,
- in a response,
- according to diameter protocol, and/or
- in Registration-Termination-Answer message (RTA).

4. A session control entity (1) of any of preceding claims, wherein the request comprises at least one of:
- a request received,
- a de-registration, and/or,
- network initiated de-registration.

5. A subscription entity (2), comprising
means for transmitting (23), to a session control entity (1), a request (10) to terminate a registration of a user in an Internet Protocol Multimedia Subsystem, IMS, wherein the request comprises user identities,
means for receiving (21) from the session control entity (1), responsive to the request, an indication (12) indicating that the user is registered for an IMS emergency service and that at least one registration of the user that does not comprise the registration for the IMS emergency service is terminated, wherein the indication comprises an IMS experimental result code, and,
means for maintaining (22,23) the registration of the user active based on the received indication.

6. A subscription entity of claim 5, wherein the indication is received at least one of:
- in a rejection,
- in a response,
- according to diameter protocol, and/or
- in Registration-Termination-Answer message (RTA).

7. A subscription entity (2) of claim 5 or 6, wherein the request (10) to terminate comprises a network initiated de-registration.

8. A method of registration, comprising:
receiving a request (10) from a subscription entity to terminate a registration of a user in an Internet Protocol Multimedia Subsystem, IMS, wherein the request comprises user identities,
determining (11) status of various registrations of the user, comprising determining if the user is registered for an IMS emergency service,
keeping the user registered (11) for the emergency service, if based on the determination the user is registered for the IMS emergency service,
terminating at least one registration relating to the user, wherein the at least one registration does not comprise the registration for the IMS emergency service, and,
transmitting an indication (12) to the subscription entity indicating that the user is registered for the emergency service if based on the determination the user is registered for the emergency service, wherein the indication comprises an IMS experimental result code.

9. A method of claim 8 wherein the request (10) to terminate comprises a network initiated de-registration.

10. A method of registration, comprising:
transmitting, by a subscription entity, a request (10), to a session control entity (1), to terminate a registration of a user in an Internet Protocol Multimedia Subsystem, IMS, wherein the request comprises user identities,
receiving, by the subscription entity, from the session control entity (1), responsive to the request, an indication (12) indicating that the user is registered for an IMS emergency service and that at least one registration of the user that does not comprise the registration for the IMS emergency service is terminated, wherein the indication comprises an IMS experimental result code, and,
maintaining the registration (13) of the user active based on the received indication.

11. A method of claim 10, wherein the request (10) to terminate comprises a network initiated de-registration.

12. A computer program product comprising code means adapted to produce steps of any of claims 8-11 when loaded into the memory of a computer.

## Patentansprüche

1. Sitzungssteuerentität (1), die Folgendes umfasst:
Mittel (21) zum Empfangen von einer Teilnehmerentität (2) einer Anforderung (10) zum Beenden einer Registrierung eines Anwenders in einem Internetprotokoll-Multimediauntersystem, IMS, wobei die Anforderung Anwenderkennungen enthält,
Mittel (22) zum Bestimmen des Status verschiedener Registrierungen des Anwenders einschließlich des Bestimmens, ob der Anwender für einen IMS-Notdienst registriert ist,
Mittel (22), um die Registrierung des Anwenders für den IMS-Notdienst nicht zu beenden,
Mittel (22) zum Beenden wenigstens einer Registrierung in Bezug auf den Anwender, wobei die wenigstens eine Registrierung die Registrierung für den IMS-Notdienst nicht enthält, und
Mittel (23) zum Senden zu der Teilnehmerentität (2) eines Hinweises (12), der angibt, dass der Anwender für einen Notdienst registriert ist, basierend auf der Bestimmung, dass der Anwender für den Notdienst registriert ist, wobei die Angabe einen IMS-Code für experimentelles Ergebnis enthält.

2. Sitzungssteuerentität (1) nach einem vorhergehenden Anspruch, wobei der Anwender enthält:
- eine Anwenderkennung oder
- eine öffentliche Kennung oder
- eine IMPU.

3. Sitzungssteuerentität (1) nach einem vorhergehenden Anspruch, wobei die Angabe gesendet wird:
- in Reaktion auf die Anforderung und/oder
- in einer Zurückweisung und/oder
- in einer Antwort und/oder
- gemäß einem Durchmesserprotokoll und/oder
- in einer Registrierungsbeendigungs-Antwortnachricht (RTA).

4. Sitzungssteuerentität (1) nach einem vorhergehenden Anspruch, wobei die Anforderung enthält:
- eine empfangene Anforderung und/oder
- eine Deregistrierung und/oder
- eine netzinitiierte Deregistrierung.

5. Teilnehmerentität (2), die Folgendes umfasst:
Mittel (23) zum Senden zu einer Sitzungssteuerentität (1) einer Anforderung (10), eine Registrierung eines Anwenders in einem Internetprotokoll-Multimediauntersystem, IMS, zu beenden, wobei die Anforderung Anwenderkennungen enthält,
Mittel (21) zum Empfangen von der Sitzungssteuerentität (1) in Reaktion auf die Anforderung eines Hinweises (12), der angibt, dass der Anwender für einen IMS-Notdienst registriert ist und dass wenigstens eine Registrierung des Anwenders, die die Registrierung für den IMS-Notdienst nicht enthält, beendet wird, wobei der Hinweis einen IMS-Code für experimentelles Ergebnis enthält, und
Mittel (22, 23), um die Registrierung des Anwenders anhand des empfangenen Hinweises aktiv zu halten.

6. Teilnehmerentität nach Anspruch 5, wobei der Hinweis empfangen wird:
- in einer Zurückweisung und/oder
- in einer Antwort und/oder
- gemäß einem Durchmesserprotokoll und/oder
- in einer Registrierungsbeendigungs-Antwortnachricht (RTA).

7. Teilnehmerentität (2) nach Anspruch 5 oder 6, wobei die Anforderung (10) zum Beenden eine netzinitiierte Deregistrierung enthält.

8. Registrierungsverfahren, das Folgendes umfasst:
Empfangen einer Anforderung (10) von einer Teilnehmerentität, eine Registrierung eines Anwenders in einem Internetprotokoll-Multimediauntersystem, IMS, zu beenden, wobei die Anforderung Anwenderkennungen enthält,
Bestimmen (11) des Status verschiedener Registrierungen des Anwenders, einschließlich des Bestimmens, ob der Anwender für einen IMS-Notdienst registriert ist,
Aufrechterhalten (11) der Registrierung des Anwenders für den Notdienst, basierend auf der Bestimmung, dass der Anwender für den IMS-Notdienst registriert ist,
Beenden wenigstens einer Registrierung, die mit dem Anwender in Beziehung steht, wobei die wenigstens eine Registrierung nicht die Registrierung für den IMS-Notdienst enthält, und
Senden eines Hinweises (12) zu der Teilnehmerentität, der angibt, dass der Anwender für den Notdienst registriert ist, basierend auf der Bestimmung, dass der Anwender für den Notdienst registriert ist, wobei der Hinweis einen IMS-Code für experimentelles Ergebnis enthält.

9. Verfahren nach Anspruch 8, wobei die Anforderung (10) zum Beenden eine netzinitiierte Deregistrierung enthält.

10. Registrierungsverfahren, das Folgendes umfasst:
Senden durch eine Teilnehmerentität einer Anforderung (10) zu einer Sitzungssteuerentität (1), um eine Registrierung eines Anwenders in einem Internetprotokoll-Multimediauntersystem, IMS, zu beenden, wobei die Anforderung Anwenderkennungen enthält,
Empfangen durch die Teilnehmerentität von der Sitzungssteuerentität (1) in Reaktion auf die Anforderung eines Hinweises (12), der angibt, dass der Anwender für einen IMS-Notdienst registriert ist und dass wenigstens eine Registrierung des Anwenders, die die Registrierung für den IMS-Notdienst nicht enthält, beendet wird, wobei der Hinweis einen IMS-Code für experimentelles Ergebnis enthält, und
Halten der Registrierung (13) des Anwenders im aktiven Zustand anhand des empfangenen Hinweises.

11. Verfahren nach Anspruch 10, wobei die Anforderung (10) zum Beenden eine netzinitiierte Deregistrierung enthält.

12. Computerprogrammprodukt, das Codemittel enthält, die dafür ausgelegt sind, Schritte nach einem der Ansprüche 8-11 zu erzeugen, wenn es in den Speicher eines Computers geladen ist.

## Revendications

1. Entité (1) de contrôle de session, comprenant un moyen pour recevoir (21), d'une entité d'abonnement (2), une demande (10) de résiliation d'un enregistrement d'un utilisateur dans un sous-système multimédia de protocole Internet, IMS, dans lequel la demande comprend des identités d'utilisateur,
un moyen pour déterminer (22) un statut de divers enregistrements de l'utilisateur, comprenant la détermination si l'utilisateur est enregistré pour un service d'urgence IMS,
un moyen pour ne pas résilier (22) l'enregistrement de l'utilisateur pour le service d'urgence IMS,
un moyen pour résilier (22) au moins un enregistrement se rapportant à l'utilisateur, dans lequel l'au moins un enregistrement ne comprend pas l'enregistrement pour le service d'urgence IMS, et
un moyen pour (23) transmettre à l'entité d'abonnement (2) une indication (12) indiquant que l'utilisateur est enregistré pour un service d'urgence si, sur la base de la détermination, l'utilisateur est enregistré pour le service d'urgence, dans lequel l'indication comprend un code de résultat expérimental IMS.

2. Entité (1) de contrôle de session selon l'une quelconque des revendications précédentes, dans lequel l'utilisateur comprend une parmi :
- une identité d'utilisateur,
- une identité publique, ou
- une IMPU.

3. Entité (1) de contrôle de session selon l'une quelconque des revendications précédentes, dans lequel l'indication est transmise au moins un parmi :
- en réponse à la demande,
- dans un rejet,
- dans une réponse,
- conformément à un protocole de diamètre, et/ou
- dans un message de réponse de résiliation d'enregistrement (RTA).

4. Entité (1) de contrôle de session selon l'une quelconque des revendications précédentes, dans lequel la demande comprend au moins un parmi :
- une demande reçue,
- un désenregistrement, et/ou
- un désenregistrement initié par le réseau.

5. Entité (2) d'abonnement, comprenant :
un moyen pour transmettre (23), à une entité (1) de contrôle de session, une demande (10) de résiliation d'un enregistrement d'un utilisateur dans un sous-système multimédia de protocole Internet, IMS, dans lequel la demande comprend des identités d'utilisateur,
un moyen pour recevoir (21) de l'entité (1) de contrôle de session, en réponse à la demande, une indication (12) indiquant que l'utilisateur est enregistré pour un service d'urgence IMS et qu'au moins un enregistrement de l'utilisateur qui ne comprend pas l'enregistrement pour le service d'urgence IMS est résilié, dans lequel l'indication comprend un code de résultat expérimental IMS, et
un moyen pour maintenir (22, 23) l'enregistrement de l'utilisateur actif sur la base de l'indication reçue.

6. Entité d'abonnement selon la revendication 5, dans laquelle l'indication est reçue au moins un parmi :
- dans un rejet,
- dans une réponse,
- conformément à un protocole de diamètre, et/ou
- dans un message de réponse de résiliation d'enregistrement (RTA).

7. Entité (2) d'abonnement selon la revendication 5 ou 6, dans laquelle la demande (10) de résiliation comprend un désenregistrement initié par le réseau.

8. Procédé d'enregistrement, comprenant :
la réception d'une demande (10) d'une entité d'abonnement de résiliation d'un enregistrement d'un utilisateur dans un sous-système multimédia de protocole Internet, IMS, dans lequel la demande comprend des identités d'utilisateur,
la détermination (11) d'un statut de divers enregistrements de l'utilisateur, comprenant la détermination si l'utilisateur est enregistré pour un service d'urgence IMS,
le maintien de l'utilisateur enregistré (11) pour le service d'urgence si, sur la base de la détermination, l'utilisateur est enregistré pour le service d'urgence IMS,
la résiliation d'au moins un enregistrement se rapportant à l'utilisateur, dans lequel l'au moins un enregistrement ne comprend pas l'enregistrement pour le service d'urgence IMS, et
la transmission d'une indication (12) à l'entité d'abonnement indiquant que l'utilisateur est enregistré pour le service d'urgence si, sur la base de la détermination, l'utilisateur est enregistré pour le service d'urgence, dans lequel l'indication comprend un code de résultat expérimental IMS.

9. Procédé selon la revendication 8 dans lequel la demande (10) de résiliation comprend un désenregistrement initié par le réseau.

10. Procédé d'enregistrement, comprenant :
la transmission, par une entité d'abonnement, d'une demande (10), à une entité (1) de contrôle de session, de résiliation d'un enregistrement d'un utilisateur dans un sous-système multimédia de protocole Internet, IMS, dans lequel la demande comprend des identités d'utilisateur,
la réception, par l'entité d'abonnement, de l'entité (1) de contrôle de session, en réponse à la demande, d'une indication (12) indiquant que l'utilisateur est enregistré pour un service d'urgence IMS et qu'au moins un enregistrement de l'utilisateur qui ne comprend pas l'enregistrement pour le service d'urgence IMS est résilié, dans lequel l'indication comprend un code de résultat expérimental IMS, et
le maintien de l'enregistrement (13) de l'utilisateur actif sur la base de l'indication reçue.

11. Procédé selon la revendication 10, dans lequel la demande (10) de résiliation comprend un désenregistrement initié par le réseau.

12. Produit de programme informatique comprenant des moyens de code adaptés à produire des étapes selon l'une quelconque des revendications 8 à 11 lorsqu'il est chargé dans la mémoire d'un ordinateur.
